# EUROPEAN PATENT APPLICATION

(11) **EP 2 427 026 A1**
(43) Date of publication of application: **07.03.2012**
(21) Application number: 09844773.3
(22) Date of filing: 18.05.2009
(51) Int. Cl.: H04W 88/02

(54) **DATA TRANSMITTING METHOD, TERMINAL PROCESSOR AND TERMINAL DEVICE IN ZIGBEE NETWORK**

(71) Applicant: Huawei Technologies Co., Ltd., Shenzhen, Guangdong 518129 (CN)
(72) Inventor: YANG, Hui, Guangdong 518129 (CN); XING, Zhihao, Guangdong 518129 (CN); TANG, Houcheng, Guangdong 518129 (CN)
(74) Representative: Thun, Clemens
(86) International application number: PCT/CN2009/071836
(87) International publication number: WO 2010/133020

(57) **Abstract**

A data transmission method in a Zigbee network, a terminal processor, and a terminal device are provided. The method includes: receiving, by a connection driving module, through a connection device, data from a Zigbee communication module (S101); performing, by an adaptor, conversion and task-processing on the data (S102); and receiving, by an application module, the converted and task-processed data, and performing an application operation on the converted and task-processed data (S103).

## Description

### FIELD OF THE INVENTION

The present invention relates to the field of communications technologies, and in particular, to a data transmission method in a Zigbee network, a terminal processor, and a terminal device.

### BACKGROUND OF THE INVENTION

The Zigbee wireless sensor network technology is researched and developed based on the standard IEEE 802.15.4 communication protocol. Zigbee has a transmission range with a radius of 10 to 100 meters, and supports a transmission data rate of 20 to 250 Kbps. Meanwhile, each Zigbee coordinator supports up to 255 devices, and a Zigbee network supports up to 65,535 devices. As an emerging wireless networking communication technology, Zigbee is characterized by short distance, low rate, low cost, low power consumption, and so on, and is gradually applied in telecommunication systems, resulting in mobile terminal devices having a Zigbee function.

Currently, a device having a Zigbee function may be connected to a handset device directly through an external connection line (such as a USB connection line) of the handset, but the method of implementation does not disclose design details on the handset side and is not desirable in terms of integration, portability, and power management.

In addition, there is also a mobile terminal device including an IEEE 802.15.4 physical layer based transceiver and a handset processor, where the IEEE 802.15.4 physical layer based transceiver directly communicates with the handset processor, and the handset processor needs to receive and process data packets from the Radio Frequency (RF) space in real time and send data packets to the RF space. Zigbee-related functional modules are implemented in a Wireless Internet Platform for Interoperability (WIPI) in the handset processor, and the handset processor includes an IEEE 802.15.4 transceiver driver, a transceiver hardware abstraction layer, a WIPI real-time engine, an application manager, and a WIPI application platform. The WIPI application platform includes a Zigbee control application, a Zigbee user application, a Zigbee control interface, a Zigbee network interface, and a Zigbee support interface. Therefore, the handset processor not only needs to process handset applications, but also is burdened with the tasks of the Zigbee network layer, such as establishing and maintaining a Zigbee network.

When implementing the present invention, the inventor discovers that the prior art at least has the following problems.

The direct communication between a IEEE 802.15.4 based transceiver and a handset processor and the real-time reception and processing of the data from a transceiver by the handset processor increase the operational burden of the handset processor; Zigbee network layer function is implemented in the handset processor, so that the handset processor needs to establish and maintain a Zigbee network in real time, which increases the development cost and the burden of network maintenance.

### SUMMARY OF THE INVENTION

Embodiments of the present invention provide a data transmission method in a Zigbee network, a terminal processor, and a terminal device, to reduce the operational burden of a terminal and decrease the development cost.

Embodiments of the present invention adopt the following technical solutions.

A data transmission method in a Zigbee network includes:
receiving, by a connection driving module, through a connection device, data from a Zigbee communication module;
performing, by an adaptor, conversion and task-processing on the data; and
receiving, by an application module, the converted and task-processed data, and performing an application operation on the converted and task-processed data.

A terminal processor includes:
a connection driving module, connecting an adaptor and a Zigbee communication module, and configured to perform bi-directional data transmission between the adaptor and the Zigbee communication module through a Zigbee network;
the adaptor, located between the connection driving module and an application module, and configured to perform conversion and task-processing on data transmitted between the connection driving module and the application module; and
the application module, connected to the adaptor, and configured to perform an application operation on the data converted and task-processed by the adaptor.

A terminal device includes a Zigbee communication module, a connection device, and a terminal processor, where:
the Zigbee communication module is connected to the connection device, and configured to establish and maintain a Zigbee network and perform bi-directional data transmission with the connection device through the Zigbee network;
the connection device is located between the Zigbee communication module and the terminal processor, and configured to perform bi-directional data transmission between the Zigbee communication module and the terminal processor; and
the terminal processor is connected to the connection device, and configured to perform conversion and task-processing on data transmitted through the connection device and perform an application operation on the converted and task-processed data.

With the data transmission method in the Zigbee network, the terminal processor, and the terminal device according to the embodiments of the present invention, the terminal processor and the Zigbee communication module are effectively connected through the connection device, so that the terminal processor and the Zigbee communication module are integrated to form a terminal device. As compared with the prior art, the terminal device does not need to connect to a device having a Zigbee function separately through an external connection line, so that the terminal device has good integration and portability. The Zigbee communication module may establish and maintain a Zigbee network, and as compared with the prior art, may reduce the operational burden of the terminal processor and decrease the development and maintenance cost. In addition, the adaptor may provide management guarantee for the terminal processor and the Zigbee communication module.

### BRIEF DESCRIPTION OF THE DRAWINGS

To make the technical solutions of the embodiments of the present invention or the prior art clearer, the accompanying drawings used in the description of the embodiments or the prior art are briefly described hereinafter. Evidently, the accompanying drawings illustrate only some exemplary embodiments of the present invention, and persons of ordinary skill in the art may obtain other drawings based on these drawings without creative efforts.

FIG. 1 is a flowchart of a data transmission method in a Zigbee network according to Embodiment 1 of the present invention;

FIG. 2 is a flowchart of a data transmission method in a Zigbee network according to Embodiment 2 of the present invention;

FIG. 3 is a schematic structure diagram of a Zigbee communication module according to an embodiment of the present invention;

FIG. 4 is a schematic structure diagram of a handset processor according to an embodiment of the present invention;

FIG. 5 is a schematic diagram of a network discovery process of a gateway abstraction module according to an embodiment of the present invention;

FIG. 6 is a schematic diagram of a network discovery process of a gateway abstraction module according to an embodiment of the present invention;

FIG. 7 is a flowchart of a data transmission method in a Zigbee network according to Embodiment 3 of the present invention;

FIG. 8 is a flowchart of a data transmission method in a Zigbee network according to Embodiment 4 of the present invention;

FIG. 9 is a schematic structure diagram of a terminal processor according to Embodiment 5 of the present invention;

FIG. 10 is a schematic structure diagram of a terminal processor according to Embodiment 6 of the present invention; and

FIG. 11 is a schematic structure diagram of a terminal device according to Embodiment 7 of the present invention.

### DETAILED DESCRIPTION OF THE EMBODIMENTS

The technical solutions of the embodiments of the present invention are hereinafter described clearly and completely with reference to the accompanying drawings in the embodiments of the present invention. It is evident that the described embodiments are only some exemplary embodiments of the present invention, rather than all the embodiments of the present invention. All other embodiments that persons of ordinary skill in the art obtain without creative efforts based on the embodiments of the present invention also fall within the scope of the present invention.

To make the advantages of the technical solutions of the present invention clearer, the present invention is hereinafter described in detail with reference to the accompanying drawings and the embodiments.

In all the embodiments of the present invention, all data transmissions are implemented in a Zigbee network, but the present invention is not limited to a Zigbee network, and instead, the data transmission method, the terminal processor, and the terminal device may also be used in other wireless networks.

### Embodiment 1

This embodiment provides a data transmission method in a Zigbee network, to reduce the operational burden of a terminal and decrease the development cost.

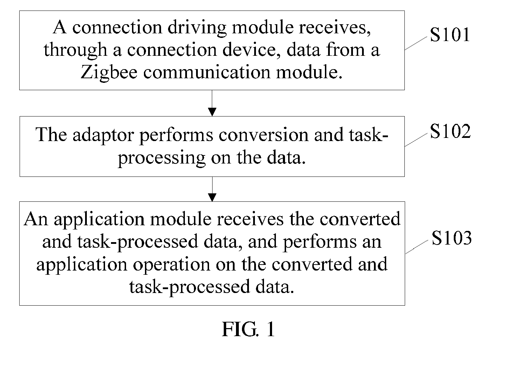

As shown in FIG. 1, in a Zigbee network, when data is sent from a Zigbee communication module to a terminal processor, the method includes the following steps:

S101. A connection driving module receives, through a connection device, data from a Zigbee communication module.

Further, the connection driving module processes the data from the Zigbee communication module through the connection device, and if the connection driving module determines the data to be network-related data, the connection driving module sends the data to an adaptor.

S102. The adaptor performs conversion and task-processing on the data.

The conversion and task-processing specifically include:
converting chip-related data in the data to application-related data; and
according to the type of the application-related data, performing data service processing or management service processing on the application-related data.

S103. An application module receives the converted and task-processed data, and performs an application operation on the converted and task-processed data.

The reception of the converted and task-processed data by the application module is specifically implemented in two manners:
Manner 1: receiving the converted and task-processed data through a gateway abstraction module; and
Manner 2: directly receiving the converted and task-processed data.

With the data transmission method in the Zigbee network according to the embodiment of the present invention, the terminal processor and the Zigbee communication module are effectively connected through the connection device, so that the terminal processor and the Zigbee communication module are integrated to form a terminal device. As compared with the prior art, the terminal device does not need to connect to a device having a Zigbee function separately through an external connection line, so that the terminal device has good integration and portability. The Zigbee communication module may establish and maintain a Zigbee network, and as compared with the prior art, may reduce the operational burden of the terminal processor and decrease the development and maintenance cost.

### Embodiment 2

By taking a handset as an example of a terminal device and a handset processor as an example of a terminal processor, this embodiment is hereinafter described in detail.

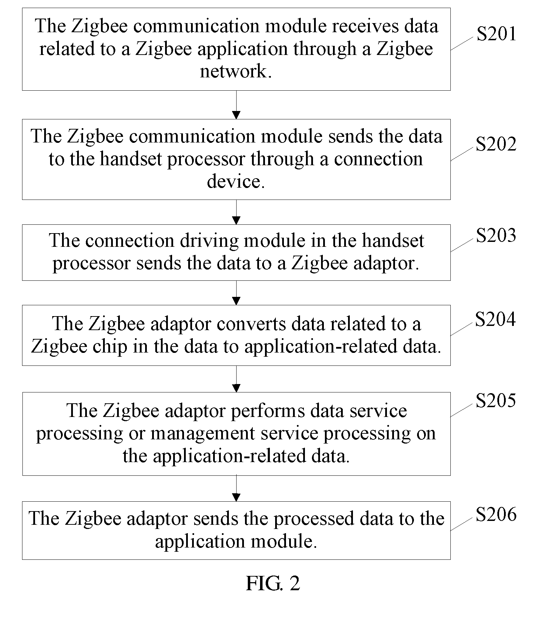

As shown in FIG. 2, in a Zigbee network, when data is sent from a Zigbee communication module to a handset processor, the method includes the following steps:

S201. The Zigbee communication module receives data related to a Zigbee application through a Zigbee network.

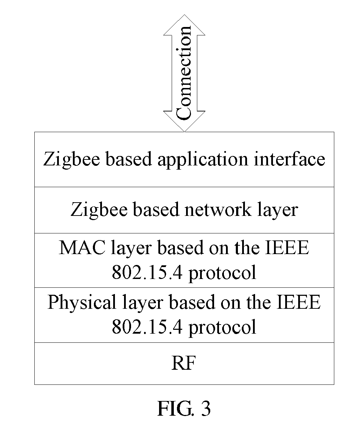

The Zigbee communication module is mainly responsible for completing the establishment and maintenance of the Zigbee network and the data communication with the application layer. As shown in FIG. 3, the Zigbee communication module includes: a physical layer based on IEEE 802.15.4 protocol, a Media Access Control (MAC) layer based on IEEE 802.15.4 protocol, a Zigbee based network layer, and a Zigbee based application interface. The Zigbee communication module receives or sends data through the RF (Radio Frequency), thereby implementing the communication of the handset with the outside world.

S202. The Zigbee communication module sends the data to the handset processor through a connection device.

The connection device is configured to connect the handset processor and the Zigbee communication module, and may be an interface that the handset processor generally has, such as a Serial Peripheral Interface (SPI) or a Universal Asynchronous Receiver/Transmitter (UART).

S203. The connection driving module in the handset processor processes the data from the connection device, and if the connection driving module determines the data to be data related to the Zigbee network, the connection driving module sends the data to a Zigbee adaptor.

S204. The Zigbee adaptor converts data related to a Zigbee chip in the data to application-related data.

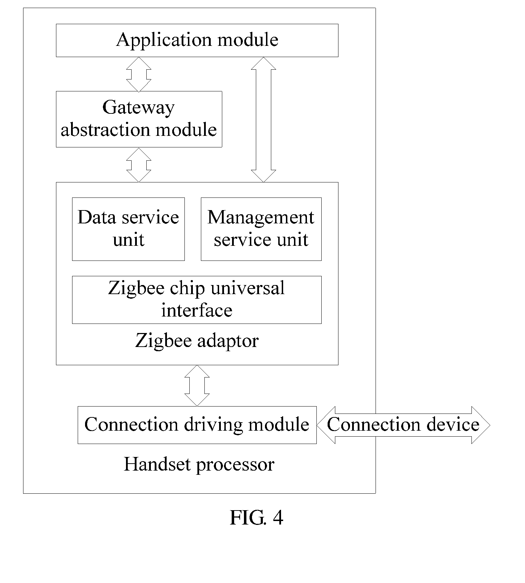

As shown in FIG. 4, the Zigbee adaptor is located between the application module and the connection driving module, and has a Zigbee chip universal interface for implementing the data conversion, where the Zigbee chip universal interface is a universal interface designed for different manufacturers or for Zigbee chips of different interfaces.

S205. The Zigbee adaptor performs data service processing or management service processing on the application-related data according to the type of the application-related data.

The Zigbee adaptor has a data service unit configured to perform data service processing, where the data service processing means processing interactive data services between the application module and the Zigbee communication module.

The Zigbee adaptor has a management service unit configured to perform management service processing, where the management service processing means processing management tasks between the handset processor itself and the Zigbee communication module. For example, when the handset is off, out of battery or under any other special circumstance, a handset power-off notification command is sent to the Zigbee communication module; and when the Zigbee communication module is under a special circumstance, for example, the Zigbee communication module has no signal, a data packet is not sent successfully, or the device requests a restart in an abnormal state, the handset processor is notified of the abnormal state. The management service unit may decide whether to report the special circumstance to the application module or deal with the special circumstance by itself.

S206. The Zigbee adaptor sends the data processed by the data service unit or the management service unit to the application module, and the application module performs an application operation on the data. The application module includes an application module of the handset's operating system itself and an application module related to the Zigbee application.

The data processed by the data service unit or the management service unit is sent to the application module in two manners:
Manner 1: when the handset is a gateway device, the Zigbee adaptor sends the data to the application module through a gateway abstraction module; and
Manner 2: when the handset is not a gateway device, the Zigbee adaptor sends the data to the application module directly.

The gateway abstraction module is mainly configured to abstract the functions of the gateway and simplify interactive information between the gateway and the Zigbee communication module. The functions of the gateway abstraction module include: local node management, remote mirror management, network security management, and data communication management.

Local node management: provides an interface for reading/writing node attributes and network attributes of a local Zigbee communication module, where the node attributes and the network attributes include: parameters in a device descriptor defined by the Zigbee specification, Personal Area Network Identifier (PANID), channel information, and so on; in addition, provides an interface having a network discovery function to obtain the address and topology information of the network for the gateway device, aiming to provide the application layer of the gateway device with an interface for obtaining the topology information of the network, which makes it possible for the gateway to master and control the information of the whole network.

Remote mirror management: provides an interface for managing a mirror image of remote node attributes. By invoking a Zigbee Device Object (ZDO) command defined in the Zigbee specification, the remote mirror node may be controlled to achieve the management of the whole network.

Network security management: implements the key management function in the Zigbee specification and provides effective network security for the whole Zigbee network. According to the Zigbee specification, two key generation methods are specified, so that two kinds of key command interfaces are provided to the application layer. The key generation and maintenance process complies with the Zigbee standard specification and is not described in detail herein.

Data communication management: supports data communication by establishing a connection with a remote node through direct addressing, or data communication directly with an end point in a local Zigbee communication module.

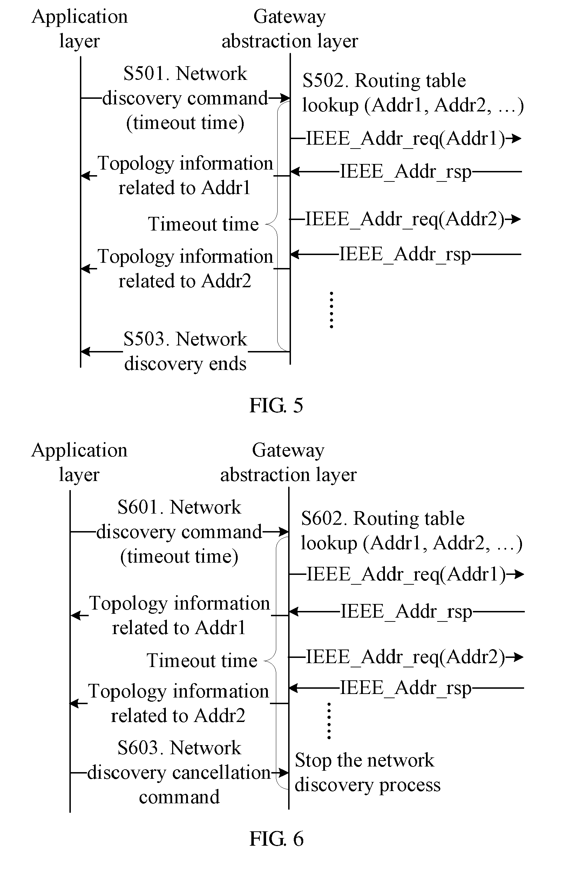

As shown in FIG. 5, the network discovery process in the gateway abstraction module includes the following steps:

S501. The application layer originates a network discovery command to a gateway abstraction layer, where the network discovery command carries timeout time.

S502. The gateway abstraction layer begins traversing from a root node in a locally maintained routing table to request for obtaining its network topology information. The process of requesting for obtaining the network topology information complies with the definition of the Zigbee specification: sending a unicast IEEE_addr_Req command to a node to be traversed, and if the recipient replies with an IEEE_addr_Rsp command, the gateway abstraction layer sends the network topology information carried in the IEEE_addr_Rsp command command to the application layer.

S503. When the duration of the network discovery and traversal process is equal to the timeout time, the network discovery and traversal process ends.

As shown in FIG. 6, the network discovery process in the gateway abstraction module may also adopt the following method:

Steps S601 and S602 are the same as steps S601 and S602.

S603. Before the network discovery times out, the application layer sends a network discovery cancellation command, and the network discovery and traversal process ends.

With the data transmission method in the Zigbee network according to the embodiment of the present invention, the handset processor and the Zigbee communication module are effectively connected through the connection device, so that the handset processor and the Zigbee communication module are integrated to form a handset terminal. As compared with the prior art, the handset terminal does not need to connect to a device having a Zigbee function separately through an external connection line, so that the handset has good integration and portability. The Zigbee communication module may establish and maintain a Zigbee network, thereby reducing the operational burden of the handset processor and decreasing the development and maintenance cost. The gateway abstraction module provides an interface having a network discovery function to obtain the address and topology information of the network for the gateway device, and in addition, may abstract the functions of the gateway, which simplifies the interactive information between the gateway and the Zigbee communication module and makes it possible for the gateway to master and control the information of the whole network, thereby reducing the development difficulty in implementing the functions of the gateway for a Zigbee handset. The design of the Zigbee adaptor provides a functional subset for the maintenance of the handset processor and the Zigbee communication module, which may provide management guarantee for the handset processor and the Zigbee communication module. The Zigbee chip universal interface in the Zigbee adaptor provides a uniform operation interface for use after different Zigbee chips are shielded, which makes the software part of the handset processor universally applicable.

### Embodiment 3

This embodiment provides a data transmission method in a Zigbee network, to reduce the operational burden of the terminal and decrease the development cost.

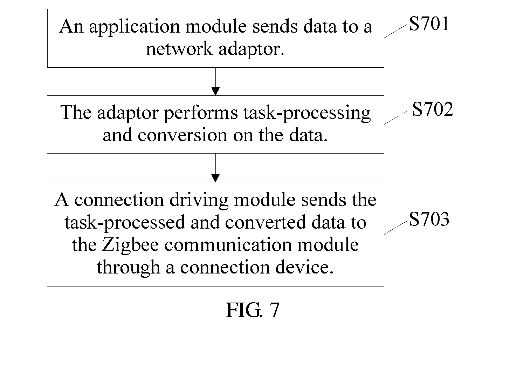

As shown in FIG. 7, in a Zigbee network, when data is sent from a terminal processor to a Zigbee communication module, the method includes the following steps:

S701. An application module sends data to an adaptor.

The data is sent by the application module to the adaptor in two manners:
Manner 1: sending the data to the adaptor through a gateway abstraction module; and
Manner 2: sending the data to the adaptor directly.

S702: The adaptor performs task-processing and conversion on the data.

The task-processing and conversion specifically include:
performing data service processing or management service processing on the data according to the type of the data; and
converting application-related data in the processed data to chip-related data.

S703. A connection driving module sends the task-processed and converted data to the Zigbee communication module through a connection device.

With the data transmission method in the Zigbee network according to the embodiment of the present invention, the terminal processor and the Zigbee communication module are effectively connected through the connection device, so that the terminal processor and the Zigbee communication module are integrated to form a terminal device. As compared with the prior art, the terminal device does not need to connect to a device having a Zigbee function separately through an external connection line, so that the terminal device has good integration and portability. The Zigbee communication module may establish and maintain a Zigbee network, and as compared with the prior art, may reduce the operational burden of the terminal processor and decrease the development and maintenance cost.

### Embodiment 4

By taking a handset as an example of a terminal device and a handset processor as an example of a terminal processor, this embodiment is hereinafter described in detail.

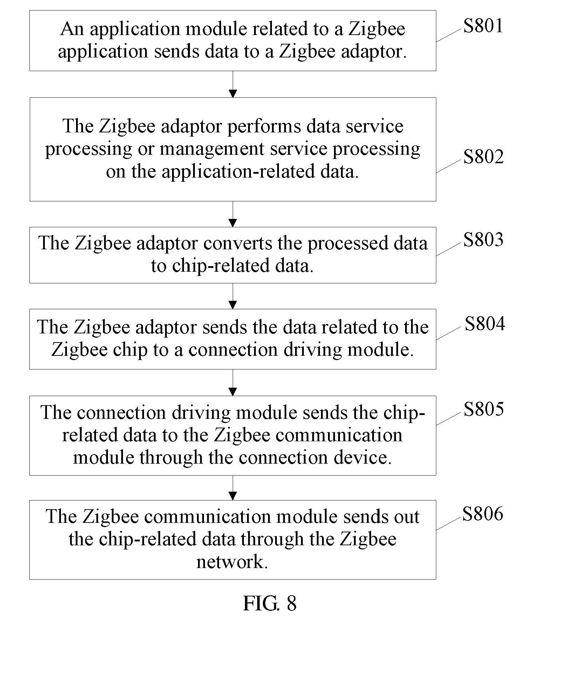

As shown in FIG. 8, in a Zigbee network, when data is sent from a handset processor to a Zigbee communication module, the method includes the following steps:

S801. An application module related to a Zigbee application sends data to a Zigbee adaptor.

The data is sent to the Zigbee adaptor in two manners:
Manner 1: when the handset is a gateway device, the application module related to the Zigbee application sends the data to the Zigbee adaptor through a gateway abstraction module; and
Manner 2: when the handset is not a gateway device, the application module related to the Zigbee application sends the data to the Zigbee adaptor directly.

The gateway abstraction module is mainly configured to abstract the functions of the gateway and simplify interactive information between the gateway and the Zigbee communication module. The functions of the gateway abstraction module include: local node management, remote mirror management, network security management, and data communication management.

The network discovery process of the gateway abstraction module is the same as that described in Embodiment 2, and is not repeatedly described herein.

S802. The Zigbee adaptor performs data service processing or management service processing on the application-related data according to the type of the data.

The Zigbee adaptor has a data service unit and a management service unit, configured to perform data service processing and management service processing respectively. The processing operation performed by the data service unit and the management service unit is the same as that described in step S205 in Embodiment 2, and is not repeatedly described herein.

S803. The Zigbee adaptor converts the data processed by the data service unit or the management service unit to chip-related data.

The Zigbee adaptor has a Zigbee chip universal interface configured to implement the data conversion, where the Zigbee chip universal interface is a universal interface designed for different manufacturers or for Zigbee chips of different interfaces.

S804. The Zigbee adaptor sends the data related to the Zigbee chip to a connection driving module.

S805. The connection driving module sends the chip-related data to the Zigbee communication module through the connection device. The connection device is configured to connect the handset processor and the Zigbee communication module, and may be an interface that the handset processor generally has, such as an SPI or a UART.

S806: The Zigbee communication module sends out the chip-related data through the Zigbee network. The Zigbee communication module is mainly responsible for completing the establishment and maintenance of the Zigbee network and the data communication with the application layer. The structure of the Zigbee communication module is shown in FIG. 3.

With the data transmission method in the Zigbee network according to the embodiment of the present invention, the handset processor and the Zigbee communication module are effectively connected through the connection device, so that the handset has good integration and portability. The Zigbee communication module may establish and maintain a Zigbee network, thereby reducing the operational burden of the handset processor and decreasing the development and maintenance cost. The gateway abstraction module provides an interface having a network discovery function to obtain the address and topology information of the network for the gateway device, and in addition, may abstract the functions of the gateway, which simplifies the interactive information between the gateway and the Zigbee communication module and makes it possible for the gateway to master and control the information of the whole network, thereby reducing the development difficulty in implementing the functions of the gateway for a Zigbee handset. The design of the Zigbee adaptor provides a functional subset for the maintenance of the handset processor and the Zigbee communication module, which may provide management guarantee for the handset processor and the Zigbee communication module. The Zigbee chip universal interface in the Zigbee adaptor provides a uniform operation interface for use after different Zigbee chips are shielded, which makes the software part of the handset processor universally applicable.

### Embodiment 5

This embodiment provides a terminal processor, to reduce the operational burden of a terminal and decrease the development cost.

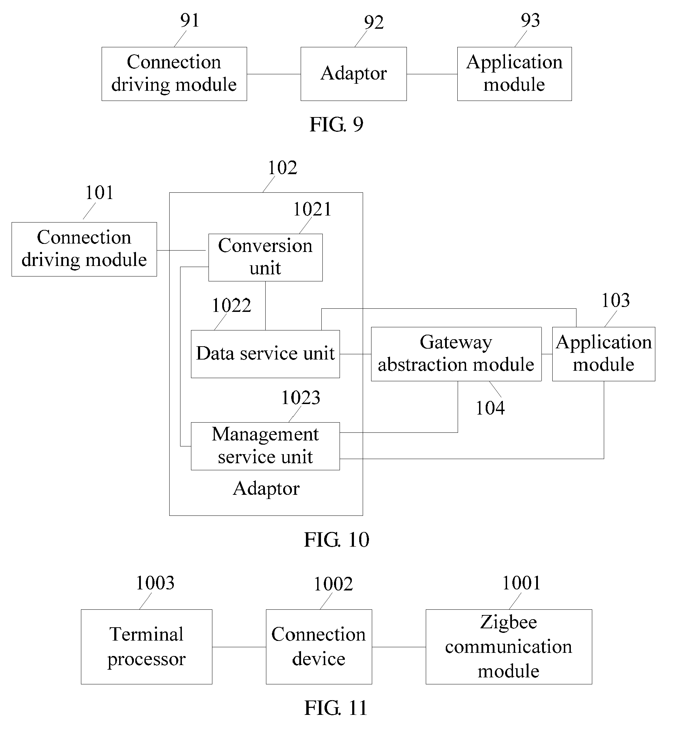

As shown in FIG. 9, the terminal processor includes:
a connection driving module 91, connecting an adaptor 92 and a Zigbee communication module, and configured to perform bi-directional data transmission between the adaptor 92 and the Zigbee communication module through a Zigbee network;
the adaptor 92, located between the connection driving module 91 and an application module 93, and configured to perform conversion and task-processing on data transmitted between the connection driving module 91 and the application module 93; and
the application module 93, connected to the adaptor 92, and configured to perform an application operation on the data converted and task-processed by the adaptor 92.

With the terminal processor according to the embodiment of the present invention, the terminal processor and the Zigbee communication module are effectively connected through the connection device, so that the terminal processor and the Zigbee communication module are integrated to form a terminal device. As compared with the prior art, the terminal device does not need to connect to a device having a Zigbee function separately through an external connection line, so that the terminal device has good integration and portability. The Zigbee communication module may establish and maintain a Zigbee network, and as compared with the prior art, may reduce the operational burden of the terminal processor and decrease the development and maintenance cost. In addition, the adaptor may provide management guarantee for the terminal processor and the Zigbee communication module.

### Embodiment 6

As shown in FIG. 10, the terminal processor includes:
a connection driving module 101, connecting an adaptor 102 and a Zigbee communication module, and configured to perform bi-directional data transmission between the adaptor 102 and the Zigbee communication module through a Zigbee network;
the adaptor 102, located between the connection driving module 101 and an application module 103, and configured to perform conversion and task-processing on data transmitted between the connection driving module 101 and the application module 103; and
the application module 103, connected to the adaptor 102, and configured to perform an application operation on the data converted and task-processed by the adaptor 102.

The adaptor 102 includes:
a conversion unit 1021, configured to convert chip-related data in the data to application-related data, or convert application-related data in the data to chip-related data,
where in this embodiment, the conversion unit 1021 is a Zigbee chip universal interface configured to implement the data conversion, and the Zigbee chip universal interface is a universal interface designed for different manufacturers or for Zigbee chips of different interfaces;
a data service unit 1022, configured to process data services exchanged between the application module and the Zigbee communication module; and
a management service unit 1023, configured to process management tasks between the terminal processor itself and the Zigbee communication module, where for example, when the handset is off, out of battery or under any other special circumstance, a handset power-off notification command is sent to the Zigbee communication module; and when the Zigbee communication module is under a special circumstance, for example, the Zigbee communication module has no signal, a data packet is not sent successfully or the device requests a restart in an abnormal state, the handset processor is notified of the abnormal state; the management service unit 1023 may decide whether to report the special circumstance to the application module or deal with the special circumstance by itself.

The terminal processor also includes:
a gateway abstraction module 104, configured to forward data between the application module 103 and the adaptor 102.

The gateway abstraction module 104 is mainly configured to abstract the functions of the gateway and simplify interactive information between the gateway and the Zigbee communication module. The functions of the gateway abstraction module include: local node management, remote mirror management, network security management, and data communication management.

With the terminal processor according to the embodiment of the present invention, the terminal processor and the Zigbee communication module are effectively connected through the connection device, so that the terminal processor and the Zigbee communication module are integrated to form a terminal device. As compared with the prior art, the terminal device does not need to connect to a device having a Zigbee function separately through an external connection line, so that the terminal device has good integration and portability. The Zigbee communication module may establish and maintain a Zigbee network, thereby reducing the operational burden of the terminal processor and decreasing the development and maintenance cost. The gateway abstraction module provides an interface having a network discovery function to obtain the address and topology information of the network for the gateway device, and in addition, may abstract the functions of the gateway, which simplifies the interactive information between the gateway and the Zigbee communication module and makes it possible for the gateway to master and control the information of the whole network, thereby reducing the development difficulty in implementing the functions of the gateway for a Zigbee terminal device. The design of the Zigbee adaptor provides a functional subset for the maintenance of the terminal processor and the Zigbee communication module, which may provide management guarantee for the terminal processor and the Zigbee communication module. The Zigbee chip universal interface in the Zigbee adaptor provides a uniform operation interface for use after different Zigbee chips are shielded, which makes the software part of the terminal processor universally applicable.

### Embodiment 7

This embodiment of the present invention provides a terminal device, to reduce the operational burden of the terminal and decrease the development cost.

As shown in FIG. 11, the terminal device includes a Zigbee communication module 1101, a connection device 1102, and a terminal processor 1103.

The Zigbee communication module 1101 is connected to the connection device 1102, and configured to establish and maintain a Zigbee network and perform bi-directional data transmission with the connection device 1102 through the Zigbee network.

The Zigbee communication module 1101 is mainly responsible for completing the establishment and maintenance of the Zigbee network and the data communication with the application layer. The Zigbee communication module includes: an IEEE 802.15.4 based physical layer, an IEEE 802.15.4 based MAC layer, a Zigbee based network layer, and a Zigbee based application interface. The Zigbee communication module receives or sends data through the RF to implement the communication of the terminal device with the outside world.

The connection device 1102 is located between the Zigbee communication module 1101 and the terminal processor 1103, and configured to perform bi-directional data transmission between the Zigbee communication module 1101 and the terminal processor 1103. The connection device may be an interface that the handset processor generally has, such as an SPI or a UART.

The terminal processor 1103 is connected to the connection device 1102, and configured to perform conversion and task-processing on the data transmitted through the connection device 1102 and perform an application operation on the converted and task-processed data.

The terminal processor 1103 includes:
a connection driving module, connecting an adaptor and a Zigbee communication module, and configured to perform bi-directional data transmission between the adaptor and the Zigbee communication module through a Zigbee network;
the adaptor, located between the connection driving module and an application module, and configured to perform conversion and task-processing on the data transmitted between the connection driving module and the application module; and
the application module, connected to the adaptor, and configured to perform an application operation on the data converted and task-processed by the adaptor.

With the terminal device according to the embodiment of the present invention, the terminal processor and the Zigbee communication module are effectively connected through the connection device, so that the terminal processor and the Zigbee communication module are integrated to form a terminal device. As compared with the prior art, the terminal device does not need to connect to a device having a Zigbee function separately through an external connection line, so that the terminal device has good integration and portability. The Zigbee communication module may establish and maintain a Zigbee network, and as compared with the prior art, may reduce the operational burden of the terminal processor and decrease the development and maintenance cost.

Persons of ordinary skill in the art should understand that all or a part of the processes in the methods of the above embodiments may be implemented by relevant hardware instructed by a computer program. The program may be stored in a computer readable storage medium. When the program is run, the processes in the methods of the above embodiments are performed. The storage medium may be a magnetic disk, an optical disk, a Read-Only Memory (ROM), or a Random Access Memory (RAM).

In conclusion, the above are merely exemplary embodiments of the present invention, and the scope of the present invention is not limited thereto. Changes or replacements readily apparent to persons skilled in the art within the technical scope of the present invention shall fall within the scope of the present invention. Therefore, the protection scope of the present invention is subject to the appended claims.

## Claims

1. A data transmission method in a Zigbee network, comprising:
receiving, by a connection driving module, through a connection device, data from a Zigbee communication module;
performing, by an adaptor, conversion and task-processing on the data;
receiving, by an application module, the converted and task-processed data, and
performing, by the application module, an application operation on the converted and task-processed data.

2. The data transmission method in a Zigbee network according to claim 1, wherein before the performing, by the adaptor, conversion and task-processing on the data, the method further comprises:
determining, by the connection driving module, the data to be network-related data, and sending the data to the adaptor.

3. The data transmission method in a Zigbee network according to claim 1, wherein the performing, by the adaptor, conversion and task-processing on the data, comprises:
converting chip-related data in the data to application-related data; and
according to a type of the application-related data, performing data service processing or management service processing on the application-related data.

4. The data transmission method in a Zigbee network according to claim 1, wherein the receiving, by the application module, the converted and task-processed data, comprises:
receiving the converted and task-processed data through a gateway abstraction module;
or
directly receiving the converted and task-processed data.

5. A terminal processor, comprising:
a connection driving module, connecting an adaptor and a Zigbee communication module, and configured to perform bi-directional data transmission between the adaptor and the Zigbee communication module through a Zigbee network;
the adaptor, located between the connection driving module and an application module, and configured to perform conversion and task-processing on data transmitted between the connection driving module and the application module; and
the application module, connected to the adaptor, and configured to perform an application operation on the data converted and task-processed by the adaptor.

6. The terminal processor according to claim 5, wherein the adaptor comprises:
a conversion unit, configured to convert chip-related data in the data to application-related data, or convert application-related data in the data to chip-related data;
a data service unit, configured to process data services exchanged between the application module and the Zigbee communication module; and
a management service unit, configured to process management tasks between the terminal processor itself and the Zigbee communication module.

7. The terminal processor according to claim 5, further comprising:
a gateway abstraction module, configured to forward data between the application module and the adaptor.

8. A terminal device, comprising a Zigbee communication module, a connection device, and a terminal processor, wherein
the Zigbee communication module is connected to the connection device, and configured to establish and maintain a Zigbee network and perform bi-directional data transmission with the connection device through the Zigbee network;
the connection device is located between the Zigbee communication module and the terminal processor, and configured to perform bi-directional data transmission between the Zigbee communication module and the terminal processor; and
the terminal processor is connected to the connection device, and configured to perform conversion and task-processing on data transmitted through the connection device and perform an application operation on the converted and task-processed data.

9. The terminal device according to claim 8, wherein the terminal processor comprises:
a connection driving module, connecting an adaptor and the Zigbee communication module, and configured to perform bi-directional data transmission between the adaptor and the Zigbee communication module through the Zigbee network;
the adaptor, located between the connection driving module and an application module, and configured to perform conversion and task-processing on data transmitted between the connection driving module and the application module; and
the application module, connected to the adaptor, and configured to perform an application operation on the data converted and task-processed by the adaptor.
